# EUROPÄISCHE PATENTSCHRIFT

(11) **EP 0 381 986 B1**
(45) Veröffentlichungstag und Bekanntmachung des Hinweises auf die Patenterteilung: **20.04.1994**
(21) Anmeldenummer: 90101260.9
(22) Anmeldetag: 23.01.1990
(51) Int. Cl.: C09K 3/30

(54) **Verwendung von C3- bis C5- Polyfluoralkanen als Treibgase**
Use of C3 to C5 polyfluoroalkanes as gas propellants
Utilisation de polyfluoroalcanes en C3-C5 comme gaz propulseurs

(30) Priorität: 04.02.1989 DE 3903336
(43) Veröffentlichungstag der Anmeldung: 16.08.1990
(62) Teilanmeldung aus: 90114011.1
(73) Patentinhaber: BAYER AG, 51368 Leverkusen (DE)
(72) Erfinder: Sommerfeld, Claus-Dieter, Dr., D-5063 Overath 2 (DE); Lamberts, Wilhelm, Dr., D-5000 Köln 80 (DE); Bielefeldt, Dietmar, Dr., D-4030 Ratingen 8 (DE); Marhold, Albrecht, Dr., D-5090 Leverkusen 1 (DE); Negele, Michael, Dr., D-5000 Köln 80 (DE)

(56) Entgegenhaltungen:
- EP-A- 0 134 666
- DE-A- 1 542 076
- US-A- 3 369 913

## Beschreibung

Die vorliegende Erfindung betrifft die Verwendung von mindestens zwei Fluoratomen enthaltenden C₃- bis C₅-Polyfluoralkanen als Treibgase und wärmedämmende Zellgase bei der Herstellung von Schaumstoffen auf der Basis von Isocyanaten.

Es ist bekannt, als Treibgase für die erwähnten Zwecke Fluorchlorkohlenwasserstoffe zu verwenden, beispielsweise Trichlorfluormethan, Dichlordifluormethan und Trichlorfluorethan. Nach neueren Untersuchungen ist der Chlorgehalt konventioneller Treibgase schädlich für die Ozonschicht der Erdatmosphäre (siehe J.F.D. Mills, Cell. Polym. 5, 343 (1987) und F.S. Rowland et al., Nature 239, 8 (1974)), weshalb Mengenbegrenzungen für die Herstellung von Fluorchlorkohlenwasserstoffen festgelegt worden sind. Es besteht deshalb ein Bedürfnis nach chlorfreien Treibgasen.

Es wurde nun gefunden, daß sich Polyfluoralkane der Formel

CX₃ - CY₂ - R (I)

in der
am gleichen C-Atom befindliche Reste X für Wasserstoff und/oder Fluor,
am gleichen C-Atom befindliche Reste Y für Wasserstoff, Fluor und/oder CF₃ und
R für CH₂F, CHF₂, CH₃, CF₃, CF₂-CH₃, CF₂CH₂F, CH₂-CH₃, CH₂-CH₂-CH₃ oder -CH(CH₃)-CH₃ stehen
und ein Molekül der Formel (I) mindestens zwei Fluoratome enthält,
wobei Perfluorpropan ausgenommen ist, als Treibgase und
wärmedämmende Zellgase bei der Herstellung von geschlossenzelligen Schaumstoffen auf der Basis von Isocyanaten verwenden lassen.

Erfindungsgemäß ist bevorzugt, daß in der Formel I
X₃,Y₂ und R mit folgender Bedeutung in einer der folgenden Kombinationen vorliegen:

| X₃ | Y₂ | R |
|---|---|---|
| F₃ | H₂ | CH₂F |
| F₃ | HF | CH₂F |
| F₃ | H₂ | CHF₂ |
| HF₂ | F₂ | CH₂F |
| F₃ | HF | CH₃ |
| H₃ | F₂ | CH₃ |
| F₃ | F₂ | CF₂-CH₃ |
| F₃ | HF | CF₂-CH₃ |
| F₃ | H₂ | CF₂-CFH₂ |
| F₃ | H₂ | CH₂-CH₃ |
| H₃ | F₂ | CF₂-CH₃ |
| F₃ | H₂ | CF₂-CH₃ |
| F₃ | HCF₃ | CH₃ |
| F₃ | H₂ | CH₂-CH₂-CH₃ |
| F₃ | H₂ | -CH(CH₃)-CH₃ |
| F₃ | H₂ | CF₃ |
| H₃ | F₂ | CH₂-CF₂H |

Die Herstellung erfindungsgemäß zu verwendender Polyfluoralkane ist bekannt (siehe beispielsweise Zh. Org. Khim. 1980, 1401-1408 und 1982, 946 und 1168; Zh. Org. Khim. 1988, 1558; J. Chem. Soc. Perk. 1, 1980, 2258; J. Chem. Soc. Perk. Trans. 2, 1983, 1713; J. Chem. Soc. C 1969, 1739; Chem. Soc. 1949, 2860; Zh. Anal. Khim. 1981 36 (6), 1125; J. Fluorine Chem. 1979, 325; Izv. Akad. Nauk. SSSR, Ser. Khim. 1980, 2117 (russ.); Rosz. Chem. 1974 (48), 1697 und J.A.C.S. 67, 1195 (1945), 72, 3577 (1950) und 76, 2343 (1954)).

Die erfindungsgemäß zu verwendenden Treibgase können als Einzelverbindungen der Formel (I), Mischungen von Verbindungen der Formel (I) und Mischungen von Verbindungen der Formel (I) mit konventionellen Treibgasen verwendet werden. Bevorzugt werden Einzelverbindungen der Formel (I) oder Mischungen von Verbindungen der Formel (I) verwendet.

Die Herstellung von Kunststoff-Schaumstoffen unter Verwendung von Treibgasen ist allgemein bekannt. Bei der Herstellung von geschlossenzelligen Schaumstoffen können die Treibgase auch als wärmedämmende Zellgase wirksam werden. Dies ist auch bei den erfindungsgemäß zu verwendenden Treibgasen der Fall.

Die erfindungsgemäß zu verwendenden Treibgase gelangen bei der Herstellung von Schaumstoffen auf der Basis von Isocyanaten zum Einsatz. Vorzugsweise werden sie bei der Herstellung von Polyurethan-und/oder Polyisocyanurat-Schaumstoffen verwendet, ganz besonders bevorzugt bei der Herstellung von Hartschäumen auf Isocyanat-Basis.

Die Herstellung von Schaumstoffen auf Isocyanatbasis ist an sich bekannt und z.B. in den deutschen Offenlegungsschriften 1 694 142, 1 694 215 und 1 720 768 sowie im Kunststoff-Handbuch Band VII, Polyurethane, herausgegeben von Vieweg und Höchtlen, Carl Hanser Verlag München 1966 sowie in der Neuauflage dieses Buches, herausgegeben von G. Oertel, Carl Hanser Verlag München, Wien 1983, beschrieben.

Es handelt sich dabei vorwiegend um Urethan- und/oder Isocyanurat- und/oder Allophanat- und/oder Uretdion- und/oder Harnstoff- und/oder Carbodiimidgruppen aufweisende Schaumstoffe.

Für die Herstellung der Schaumstoffe auf Isocyanatbasis unter Verwendung erfindungsgemäßer Treibgase können eingesetzt werden:
a) Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ

   in der
   n = 2-4, vorzugsweise 2-3,
   und
   Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten,
b) Ausgangskomponenten können ferner Verbindungen sein mit mindestens zwei gegenüber Isocyanaten reaktionsfähigen Wasserstoffatomen von einem Molekulargewicht in der Regel von 400-10.000. Hierunter versteht man neben Aminogruppen, Thiogruppen oder Carboxylgruppen aufweisende Verbindungen vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 2000 bis 6000, z.B. mindestens 2, in der Regel 2 bis 8, vorzugsweise 2 bis 6 Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden,
c) Gegebenenfalls können als weitere Ausgangskomponenten Verbindungen mit mindestens zwei gegenüber Isocyanaten reaktionsfähigen Wasserstoffatomen und einem Molekulargewicht von 32 bis 399 verwendet werden, Auch in diesem Fall versteht man hierunter Hydroxylgruppen und/oder Aminogruppen und/oder Thiolgruppen und/ oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.
d) Ein Polyfluoralkan oder mehrere Polyfluoralkane der Formel (I) als Treib- und Dämmgas, gegebenenfalls im Gemisch mit konventionellen Treib- und Dämmgasen.
e) Gegebenenfalls können weitere Hilfs- und Zusatzmittel mitverwendet werden wie
   - Wasser und/oder andere leicht flüchtige organische Substanzen als Treibmittel,
   - zusätzliche Katalysatoren der an sich bekannten Art in Mengen von bis zu 10 Gew.-%, bezogen auf die Komponente b),
   - oberflächenaktive Zusatzstoffe, wie Emulgatoren und Schaumstabilisatoren,
   - Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und weitere Flammschutzmittel der an sich bekannten Art, z.B. Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Die Schaumstoffe auf Isocyanatbasis können in an sich bekannter Weise hergestellt werden.

Verfahren zur Herstellung von Polyurethankunststoffen können beispielsweise wie folgt durchgeführt werden: Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden, Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Erfindungsgemäß lassen sich auch kalthärtende Schaumstoffe herstellen (vgl. GB-PS 11 62 517, DE-OS 21 53 086).

Selbstverständlich können Schaumstoffe auch durch Blockverschäumung oder nach dem an sich bekannten Doppeltransportbandverfahren hergestellt werden.

Die nach der Erfindung erhältlichen Produkte finden z.B. als Dämmplatten für die Dachisolierung Anwendung.

Erfindungsgemäß zu verwendende Treibgase können bei der Schaumstoffherstellung beispielsweise in Mengen von 1 bis 30 Gew.-%, vorzugsweise 2 bis 10 Gew.-% eingesetzt werden, jeweils bezogen auf den Schaumstoff.

Schaumstoffe, die mit erfindungsgemäß zu verwendenden Treibgasen hergestellt wurden, zeichnen sich dadurch aus, daß bei ihnen im Vergleich zu konventionellen Schaumstoffen bei ähnlichen oder praktisch gleichen Zellstrukturen bei Herstellung, Gebrauch und Entsorgung entsprechend dem Anteil erfindungsgemäßer Treibgase die Ozonschicht der Erdatmosphäre nicht mehr negativ beeinflußt wird.

### Beispiel 1

100 g eines Polyethers der Hydroxylzahl 380, welcher durch Anlagerung von Propylenoxid an eine Lösung aus Saccharose, Propylenglykol und Wasser entstanden ist,
2 g eines Siloxanpolyethercopolymers als Schaumstabilisator,
3,8 g Wasser und
3 g Dimethylcyclohexylamin wurden vermischt.
100 g dieser Mischung wurden mit
15 g 1,1,1,3,3,3-Hexafluor-2-methylpropan als Treibmittel mittels Laborrührer intensiv vermischt.

Dieses Gemisch wurde mit 152 g rohem 4,4'-Diisocyanatodiphenylmethan verschäumt, Es entstand ein harter Polyurethanschaumstoff, Verschäumungs- und physikalische Daten:

| | |
|---|---|
| Liegezeit (s) | 10 |
| Abbindezeit (s) | 42 |
| freie Rohdichte (kg/m³) | 24 |
| Zellbild | fein. |

### Beispiel 2

100 g eines Polyethers der Hydroxylzahl 380, welcher durch Anlagerung von Propylenoxid an eine Lösung aus Saccharose, Propylenglykol und Wasser entstanden ist,
2 g eines Siloxanpolyethercopolymers als Schaumstabilisator,
3,8 g Wasser und
3 g Dimethylcyclohexylamin wurden vermischt.
100 g dieser Mischung wurden mit
15 g 1,1,1,3,3,3-Hexafluorpropan als Treibmittel mittels Laborrührer intensiv vermischt.

Dieses Gemisch wurde mit 152 g rohem 4,4'-Diisocyanatodiphenylmethan verschäumt. Es entstand ein harter Polyurethanschaumstoff. Verschäumungs- und physikalische Daten:

| | |
|---|---|
| Liegezeit (s) | 10 |
| Abbindezeit (s) | 40 |
| freie Rohdichte (kg/m³) | 22 |
| Zellbild | fein. |

### Beispiel 3

100 g eines Polyethers der Hydroxylzahl 380, welcher durch Anlagerung von Propylenoxid an eine Lösung aus Saccharose, Propylenglykol und Wasser entstanden ist,
2 g eines Siloxanpolyethercopolymers als Schaumstabilisator,
3,8 g Wasser und
3 g Dimethylcyclohexylamin wurden vermischt.
100 g dieser Mischung wurden mit
15 g 2,2,4,4-Tetrafluorbutan als Treibmittel mittels Laborrührer intensiv vermischt.

Dieses Gemisch wurde mit 152 g rohem 4,4'-Diisocyanatodiphenylmethan verschäumt. Es entstand ein harter Polyurethanschaumstoff. Verschäumungs- und physikalische Daten:

| | |
|---|---|
| Liegezeit (s) | 10 |
| Abbindezeit (s) | 39 |
| freie Rohdichte (kg/m³) | 21 |
| Zellbild | fein. |

### Beispiel 4

60 g eines Polyethers der Hydroxylzahl 950, welcher durch Anlagerung von Propylenoxid an Trimethylpropan erhalten worden ist,
40 g eines Polyethers der Hydroxylzahl 56, der durch Anlagerung von Propylenoxid an Trimethylpropan erhalten worden ist,
0,5 g Wasser und
2 g eines Siloxanpolyethercopolymers als Schaumstabilisator wurden vermischt.
100 g dieser Mischungen wurden mit
10 g 1,1,1,3,3,3-Hexafluor-2-methylpropan als Treibmittel mittels Laborrührer intensiv vermischt.

Dieses Gemisch wurde mit 164 g rohem 4,4'-Diisocyanatodiphenylmethan verschäumt. Es entstand ein harter massiver Polyurethankunststoff. Verschäumungs- und physikalische Daten:

| | |
|---|---|
| Liegezeit (s) | 75 |
| Abbindezeit (s) | 120 |
| freie Rohdichte (kg/m³) | 75 |
| Gesamtrohdichte verdichtet (kg/m³) | 350 |
| Zellbild | fein. |

### Beispiel 5

60 g eines Polyethers der Hydroxylzahl 950, welcher durch Anlagerung von Propylenoxid an Trimethylpropan erhalten worden ist,
40 g eines Polyethers der Hydroxylzahl 56, der durch Anlagerung von Propylenoxid an Trimethylolpropan erhalten worden ist,
0,5 g Wasser und
2 g eines Siloxanpolyethercopolymers als Schaumstabilisator wurden vermischt.
100 g dieser Mischung wurden mit
10 g des erfindungsgemäßen 1,1,1,3,3,3-Hexafluorpropan als Treibmittel mittels Laborrührer intensiv vermischt.

Dieses Gemisch wurde mit 164 g rohem 4,4'-Diisocyanatodiphenylmethan verschäumt. Es entstand ein harter massiver Polyurethankunststoff. Verschäumungs- und physikalische Daten:

| | |
|---|---|
| Liegezeit (s) | 88 |
| Abbindezeit (s) | 136 |
| freie Rohdichte (kg/m³) | 70 |
| Gesamtrohdichte verdichtet (kg/m³) | 350 |
| Zellbild | fein. |

### Beispiel 6

60 g eines Polyethers der Hydroxylzahl 950, welcher durch Anlagerung von Propylenoxid an Trimethylolpropan erhalten worden ist,
40 g eines Polyethers der Hydroxylzahl 56, der durch Anlagerung von Propylenoxid an Trimethylolpropan erhalten worden ist,
0,5 g Wasser und
2 g eines Siloxanpolyethercopolymers als Schaumstabilisator wurden vermischt.
100 g dieser Mischung wurden mit
10 g 2,2,4,4-Tetrafluorbutan als Treibmittel mittels Laborrührer intensiv vermischt.

Dieses Gemisch wurde mit 164 g rohem 4,4'-Diisocyanatodiphenylmethan verschäumt. Es entstand ein harter massiver Polyurethankunststoff. Verschäumungs- und physikalische Daten:

| | |
|---|---|
| Liegezeit (s) | 83 |
| Abbindezeit (s) | 138 |
| freie Rohdichte (kg/m³) | 68 |
| Gesamtrohdichte verdichtet (kg/m³) | 350 |
| Zellbild | fein. |

### Beispiel 7

91 g eines Polyethers der Hydroxylzahl 56, der durch Anlagerung von Propylenoxid an Trimethylolpropan erhalten worden ist,
9 g Monoethylenglykol und
0,1 g Wasser wurden vermischt.
100 g dieser Mischung wurden mit
15 g 1,1,1,3,3,3-Hexafluor-2-methylpropan als Treibmittel mittels Laborrührer vermischt.

Dieses Gemisch wurde mit 56 g rohem 4,4'-Diisocyanatodiphenylmethan verschäumt. Es entstand ein zähelastischer Polyurethanschaumstoff. Verschäumungs- und physikalische Daten:

| | |
|---|---|
| Liegezeit (s) | 33 |
| Abbindezeit (s) | 112 |
| freie Rohdichte (kg/m³) | 131 |
| Zellbild | fein. |

### Beispiel 8

91 g eines Polyethers der Hydroxylzahl 56, der durch Anlagerung von Propylenoxid an Trimethylolpropan erhalten worden ist,
9 g Monoethylenglykol und
0,1 g Wasser wurden vermischt.
100 g dieser Mischungen wurden mit
15 g 1,1,1,3,3,3-Hexafluorpropan als Treibmittel mittels Laborrührer intensiv vermischt.

Dieses Gemisch wurde mit 56 g rohem 4,4'-Diisocyanatodiphenylmethan verschäumt. Es entstand ein zähelastischer Polyurethanschaumstoff. Verschäumungs- und physikalische Daten:

| | |
|---|---|
| Liegezeit (s) | 36 |
| Abbindezeit (s) | 108 |
| freie Rohdichte (kg/m³) | 121 |
| Zellbild | fein. |

### Beispiel 9

91 g eines Polyethers der Hydroxylzahl 56, der durch Anlagerung von Propylenoxid an Trimethylolpropan erhalten worden ist,
9 g Monoethylenglykol und
0,1 g Wasser wurden vermischt.
100 g dieser Mischung wurden mit
15 g 2,2,4,4-Tetrafluorbutan als Treibmittel mittels Laborrührer intensiv vermischt.

Dieses Gemisch wurde mit 56 g rohem 4,4'-Diisocyanatodiphenylmethan verschäumt. Es entstand ein zähelastischer Polyurethanschaumstoff. Verschäumungs- und phyikalische Daten:

| | |
|---|---|
| Liegezeit (s) | 38 |
| Abbindezeit (s) | 108 |
| freie Rohdichte (kg/m³) | 117 |
| Zellbild | fein. |

### Beispiel 10

100 g eines Polyethers der Hydroxylzahl 56, der durch Anlagerung von Propylenoxid an Trimethylolpropan erhalten worden ist,
3 g Wasser,
1 g eines Siloxanpolyethercopolymers als Schaumstabilisator,
0,05 g Dibutylzinndilaurat wurden vermischt.
100 g dieser Mischung wurden mit
10 g 1,1,1,3,3,3-Hexafluor-2-methylpropan als Treibmittel mittels Laborrührer intensiv vermischt.

Dieses Gemisch wurde mit 41 g Toluylendiisocyanat verschäumt. Es entstand ein weicher Polyurethanschaumstoff. Verschäumungs- und physikalische Daten:

| | |
|---|---|
| Liegezeit (s) | 8 |
| Abbindezeit (s) | 105 |
| freie Rohdichte (kg/m³) | 28 |
| Zellbild | fein. |

### Beispiel 11

100 g eines Polyethers der Hydroxylzahl 56, der durch Anlagerung von Propylenoxid an Trimethylolpropan erhalten worden ist,
3 g Wasser,
1 g eines Siloxanpolyethercopolymers als Schaumstabilisator,
0,05 g Dibutylzinndilaurat wurden vermischt.
100 g dieser Mischung wurden mit
10 g 1,1,1,3,3,3-Hexafluorpropan als Treibmittel mittels Laborrührer intensiv vermischt.

Dieses Gemisch wurde mit 41 g Toluylendiisocyanat verschäumt. Es entstand ein weicher Polyurethanschaumstoff. Verschäumungs- und physikalische Daten:

| | |
|---|---|
| Liegezeit (s) | 8 |
| Abbindezeit (s) | 103 |
| freie Rohdichte (kg/m³) | 26 |
| Zellbild | fein. |

### Beispiel 12

100 g eines Polyethers der Hydroxylzahl 56, der durch Anlagerung von Propylenoxid an Trimethylolpropan erhalten worden ist,
3 g Wasser,
1 g eines Siloxanpolyethercopolymers als Schaumstabilisator,
0,05 g Dibutylzinndilaurat wurden vermischt.
100 g dieser Mischung wurden mit
10 g 2,2,4,4-Tetrafluorbutan als Treibmittel mittels Laborrührer intensiv vermischt.

Dieses Gemisch wurde mit 41 g Toluylendiisocyanat verschäumt. Es entstand ein weicher Polyurethanschaumstoff. Verschäumungs- und physikalische Daten:

| | |
|---|---|
| Liegezeit (s) | 8 |
| Abbindezeit (s) | 108 |
| freie Rohdichte (kg/m³) | 25 |
| Zellbild | fein. |

## Patentansprüche

1. Verwendung von Polyfluoralkanen der Formel
CX₃ - CY₂ - R (I)
in der
am gleichen C-Atom befindliche Reste X für Wasserstoff und/oder Fluor,
am gleichen C-Atom befindliche Reste Y für Wasserstoff, Fluor und/oder CF₃ und
R für CH₂F, CHF₂, CH₃, CF₃, CF₂-CH₃, CF₂CH₂F, CH₂-CH₃, CH₂-CH₂-CH₃ oder -CH(CH₃)-CH₃ stehen
und ein Molekül der Formel (I) mindestens zwei Fluoratome enthält,
wobei Perfluorpropan ausgenommen ist, als Treibgase und
wärmedämmende Zellgase bei der Herstellung von geschlossenzelligen Schaumstoffen auf der Basis von Isocyanaten.

2. Verwendung nach Anspruch 1, dadurch gekennzeichnet, daß in der Formel I
X₃ , Y₂ und R mit folgender Bedeutung in
einer der folgenden Kombinationen vorliegen:
| X₃ | Y₂ | R |
|---|---|---|
| F₃ | H₂ | CH₂F |
| F₃ | HF | CH₂F |
| F₃ | H₂ | CHF₂ |
| HF₂ | F₂ | CH₂F |
| F₃ | HF | CH₃ |
| H₃ | F₂ | CH₃ |
| F₃ | F₂ | CF₂-CH₃ |
| F₃ | HF | CF₂-CH₃ |
| F₃ | H₂ | CF₂-CFH₂ |
| F₃ | H₂ | CH₂-CH₃ |
| H₃ | F₂ | CF₂-CH₃ |
| F₃ | H₂ | CF₂-CH₃ |
| F₃ | HCF₃ | CH₃ |
| F₃ | H₂ | CH₂-CH₂-CH₃ |
| F₃ | H₂ | -CH(CH₃)-CH₃ |
| F₃ | H₂ | CF₃ |
| H₃ | F₂ | CH₂-CF₂H |

3. Verwendung nach Anspruch 1 and 2, dadurch gekennzeichnet, daß es sich bei den Schaumstoffen um Polyurethan- und/oder Polyisocyanurat-Schaumstoffe handelt.

4. Verwendung nach Anspruch 1 bis 3, dadurch gekennzeichnet, daß Einzelverbindungen der Formel (I), Mischungen von Verbindungen der Formel (I) oder Mischungen von Verbindungen der Formel (I) mit konventionellen Treibgasen verwendet werden.

## Claims

1. The use of polyfluoroalkanes corresponding to the following formula:
CX₃ - CY₂ - R (I)
in which
X radicals present on one and the same C atom represent hydrogen and/or fluorine,
Y radicals present on one and the same C atom represent hydrogen, fluorine and/or CF₃ and
R represents CH₂F, CHF₂, CH₃, CF₃, CF₂-CH₃, CF₂CH₂F, CH₂-CH₃, CH₂-CH₂-CH₃ or -CH(CH₃)-CH₃,
and one molecule of the formula (I) contains at least two fluorine atoms,
with the exception of perfluoropropane, as blowing gases and heat-insulating cell gases in the production of closed-cell isocyanate-based foams.

2. The use claimed in Claim 1, characterized in that in formula I X₃, Y₂ and R are present with the following meanings in one of the following combinations:
| X₃ | Y₂ | R |
|---|---|---|
| F₃ | H₂ | CH₂F |
| F₃ | HF | CH₂F |
| F₃ | H₂ | CHF₂ |
| HF₂ | F₂ | CH₂F |
| F₃ | HF | CH₃ |
| H₃ | F₂ | CH₃ |
| F₃ | F₂ | CF₂-CH₃ |
| F₃ | HF | CF₂-CH₃ |
| F₃ | H₂ | CF₂-CFH₂ |
| F₃ | H₂ | CH₂-CH₃ |
| H₃ | F₂ | CF₂-CH₃ |
| F₃ | H₂ | CF₂-CH₃ |
| F₃ | HCF₃ | CH₃ |
| F₃ | H₂ | CH₂-CH₂-CH₃ |
| F₃ | H₂ | -CH(CH₃)-CH₃ |
| F₃ | H₂ | CF₃ |
| H₃ | F₂ | CH₂-CF₂H |

3. The use claimed in claims 1 and 2, characterized in that the foams are polyurethane and/or polyisocyanurate foams.

4. The use claimed in claims 1 to 3, characterized in that individual compounds corresponding to formula (I), mixtures of compounds corresponding to formula (I) or mixtures of compounds corresponding to formula (I) with conventional blowing gases are used.

## Revendications

1. Utilisation d'alcanes polyfluorés de formule
CX₃ - CY₂ - R (I)
dans laquelle
les restes X liés au même atome de carbone signifient hydrogène et/ou fluor,
les restes Y liés au même atome de carbone signifient hydrogène, fluor et/ou CF₃ et
R signifie-CH₂F, CHF₂, CH₃, CF₃, CF₂-CH₃, CF₂CH₂F, CH₂-CH₃, CH₂-CH₂-CH₃ ou -CH(CH₃)-CH₃,
chaque molécule (I) contient au moins deux atomes de fluor, le propane perfluoré étant exclu,
comme gaz propulseurs et comme gaz isolants générateurs d'alvéoles, lors de la préparation de mousses à base d'isocyanates.

2. Utilisation selon la revendication 1, caractérisée en ce que dans la formule (I)
X₃, Y₂ et R ayant les significations ci-après sont présents dans l'une des combinaisons ci-après :
| X₃ | Y₂ | R |
|---|---|---|
| F₃ | H₂ | CH₂F |
| F₃ | HF | CH₂F |
| F₃ | H₂ | CHF₂ |
| HF₂ | F₂ | CH₂F |
| F₃ | HF | CH₃ |
| F₃ | F₂ | CH₃ |
| F₃ | F₂ | CF₂CH₃ |
| F₃ | HF | CF₂CH₃ |
| F₃ | H₂ | CF₂-CFH₂ |
| F₃ | H₂ | CH₂-CH₃ |
| F₃ | F₂ | CF₂-CH₃ |
| F₃ | H₂ | CF₂-CH₃ |
| F₃ | HCF₃ | CH₃ |
| F₃ | H₂ | CH₂-CH₂-CH₃ |
| F₃ | H₂ | -CH(CH₃)-CH₃ |
| F₃ | H₂ | CF₃ |
| H₃ | F₂ | CH₂-CF₂H |

3. Utilisation selon les revendications 1 et 2, caractérisée en ce que, quant aux mousses, il s'agit de mousses de polyuréthanne et/ou de polyisocyanurate.

4. Utilisation selon les revendications 1 à 3, caractérisée en ce qu'on utilise des composés individuels de formule (I), des mélanges de composés de formule (I) ou encore des mélanges de composés de formule (I) avec des gaz propulseurs conventionnels.
